# EUROPEAN PATENT APPLICATION

(11) **EP 4 693 449 A1**
(43) Date of publication of application: **11.02.2026**
(21) Application number: 24785013.4
(22) Date of filing: 09.01.2024
(51) Int. Cl.: H01M 4/136, H01M 4/133, H01M 4/134, H01M 10/052, H01M 10/0562, H01M 4/02

(54) **NEGATIVE ELECTRODE FOR ALL-SOLID-STATE BATTERY AND ALL-SOLID-STATE BATTERY INCLUDING SAME**

(30) Priority: 06.04.2023 KR 20230045616
(71) Applicant: SAMSUNG SDI CO., LTD., Yongin-si, Gyeonggi-do 17084 (KR)
(72) Inventor: YANG, Jinhoon, Yongin-si, Gyeonggi-do 17084 (KR); SHIN, Hyuksoo, Yongin-si, Gyeonggi-do 17084 (KR); SOHN, Juhee, Yongin-si, Gyeonggi-do 17084 (KR); LEE, Jungho, Yongin-si, Gyeonggi-do 17084 (KR); MOON, Joongho, Yongin-si, Gyeonggi-do 17084 (KR)
(74) Representative: Michalski Hüttermann & Partner Patentanwälte mbB
(86) International application number: PCT/KR2024/000390
(87) International publication number: WO 2024/210302

(57) **Abstract**

Disclosed are a negative electrode coating for an all-solid-state battery and an all-solid-state battery comprising same, and the negative electrode for an all-solid-state battery includes a current collector, and a negative electrode coating layer on the current collector, wherein the negative electrode coating layer comprises a first region adjacent to the current collector and a second region not adjacent to the current collector, the first and the second regions containing metal sulfide, and the metal sulfide contents being greater in the second region than the first region.

## Description

### TECHNICAL FIELD

A negative electrode for an all-solid-state battery and an all-solid-state battery including the same are disclosed.

### BACKGROUND ART

Recently, rapid developments have been made in electronic devices that use batteries, such as cell phones, laptop computers, and electric vehicles.

These battery characteristics have recently led to demands for higher energy density and superior safety.

Accordingly, development of all-solid-state batteries using lithium metal as a negative electrode is underway. An all-solid-state battery is a battery composed entirely of solid materials, particularly one that uses a solid electrolyte. Lithium metal has a high average voltage because of the large potential difference with a positive electrode, and may realize high energy density with a theoretical capacity of approximately 3860 mAh/g. Additionally, solid electrolytes may also ensure safety as they have a low risk of fire.

### DETAILED DESCRIPTION OF THE INVENTION

### TECHNICAL PROBLEM

An embodiment provides a negative electrode for an all-solid-state battery that exhibits excellent lithium ionic conductivity and improved rate capability and cycle-life characteristics, and exhibits reduced overvoltage and improved efficiency and output characteristics.

Another embodiment provides an all-solid-state battery including the negative electrode.

### TECHNICAL SOLUTION

An embodiment provides an negative electrode for an all-solid-state battery which includes a current collector and a negative electrode coating layer on the current collector, wherein the negative electrode coating layer includes a first region adjacent to the current collector and a second region not adjacent to the current collector, the first region and the second region include metal sulfide, and an amount of the metal sulfide of the second region is greater than an amount of the metal sulfide of the first region.

The first region may be a region corresponding to 80% to 20% of a total thickness of the negative electrode coating layer.

The second region may be a region corresponding to 80% to 20% of a total thickness of the negative electrode coating layer.

The amount of the metal sulfide included in the second region may be 99 times to 1.5 times the amount of the metal sulfide included in the first region.

The amount of the metal sulfide may be 1 wt% to 50 wt% based on 100 wt% of the total negative electrode coating layer.

The amount of the metal sulfide included in the first region may be 40 wt% to 1 wt% based on 100 wt% of the total first region.

The amount of the metal sulfide included in the second region may be 99 wt% to 2 wt% based on 100 wt% of the total second region.

The metal sulfide may be Li₂S, Ag₂S, Au₂S, Al₃S₂, Na₂S, NiS, Ti₂S, SnS, ZnS, CdS, MoS₂, FeS, Cu₂S, CuFeS₂, or a combination thereof. In an embodiment, the metal sulfide may include Li₂S, and may further include Ag₂S, Au₂S, Al₃S₂, Na₂S, NiS, Ti₂S, SnS, ZnS, CdS, MoS₂, FeS, Cu₂S, CuFeS₂, or combination thereof.

The terminal portions of the first region and the second region may further include Ag₂S, Au₂S, Al₃S₂, Na₂S, NiS, Ti₂S, SnS, ZnS, CdS, MoS₂, FeS, Cu₂S, CuFeS₂, or a combination thereof.

The terminal portion may correspond to 90% to 10% of the total length of the negative electrode coating layer in the longitudinal direction of the current collector.

The negative electrode coating layer may include a carbon-based material and a metal.

The carbon-based material may be amorphous carbon, crystalline carbon or a mixture thereof.

The metal may be Ag, Au, Sn, Zn, Al, Mg, Ge, Cu, In, Ni, Bi, Pt, Pd or a combination thereof.

Another embodiment provides an all-solid-state battery including the negative electrode; a positive electrode; and a solid electrolyte layer between the negative electrode and the positive electrode.

The solid electrolyte may be a sulfide-based solid electrolyte.

The all-solid-state battery may further include a lithium-containing layer formed between the current collector and the negative electrode coating layer during initial charging.

The all-solid-state battery is subjected to charging and discharging.

### ADVANTAGEOUS EFFECTS

The negative electrode for an all-solid-state battery according to an embodiment may exhibit excellent lithium ionic conductivity and improved rate capability and cycle-life characteristics. In addition, the negative electrode for an all-solid-state battery according to an embodiment may reduce overvoltage and improve efficiency and output characteristics.

### DESCRIPTION OF THE DRAWINGS

FIG. 1 is a schematic view of a negative electrode for an all-solid-state battery according to an embodiment.
FIG. 2 is a view for explaining the terminal portion of a negative electrode for an all-solid-state battery according to an embodiment.
FIG. 3 is a cross-sectional view schematically showing an all-solid-state battery according to an embodiment.
FIG. 4 is a cross-sectional view schematically showing an all-solid-state battery according to another embodiment.

### BEST MODE FOR PERFORMING INVENTION

Hereinafter, embodiments of the present invention will be described in detail. However, these embodiments are merely examples, the present invention is not limited thereto, and the present invention is defined by the scope of claims.

The terminology used herein is used to describe embodiments only, and is not intended to limit the present invention. Expressions in the singular include a plurality of expressions unless the context clearly dictates otherwise.

"Combination thereof" means a mixture, a laminate, a composite, a copolymer, an alloy, a blend, a reaction product, and the like of the constituents.

Here, the term "comprise," "include," or "have" are intended to designate that the performed characteristics, numbers, step, constituted elements, or a combination thereof is present, but it should be understood that the possibility of presence or addition of one or more other characteristics, numbers, steps, constituted element, or a combination do not be precluded in advance.

Throughout this specification, whenever it is said that a part "includes" a component, this does not exclude other components, but rather includes other components, unless otherwise specifically stated.

In addition, the terms "about," "substantially," etc., used throughout the specification of this application, are used in the sense that they are numerical or close to numerical values when manufacturing and material tolerances inherent in the meanings stated are presented, and are used to prevent unscrupulous infringers from unfairly exploiting the disclosure contents in which exact or absolute values are mentioned to aid the understanding of this application.

Throughout this specification, references to "A and/or B" mean "A or B or both."

As used herein, when specific definition is not otherwise provided, t will be understood that when an element such as a layer, film, region, or substrate is referred to as being "on" another element, it may be directly on the other element or intervening elements may also be present.

In the present specification, "particle size" or "particle diameter" may be an average particle diameter. Additionally, the average particle diameter may be defined as the average particle diameter (D50) based on 50% of the cumulative volume in the cumulative size-distribution curve. The particle diameter may be measured by a method widely known to those skilled in the art, for example, by using a particle size analyzer, a transmission electron microscope, a scanning electron microscope, or a field emission scanning electron microscope (FE-SEM). Alternatively, the average particle diameter (D50) may be obtained by measuring using a measuring device that utilizes dynamic light-scattering, performing data analysis to count the number of particles for each particle size range, and calculating from this, or by measuring using a laser diffraction method. It may be measured by the laser diffraction method as follows, and the particles to be measured are dispersed in a dispersion medium and then introduced into a commercially available laser diffraction particle size measuring apparatus (for example, MT 3000 available from Microtrac), ultrasonic waves of about 28 kHz are irradiated with an output of 60 W, and an average particle diameter (D50) in 50% reference of the particle size distribution in a measuring apparatus may be calculated.

"Thickness" may be measured, for example, from photographs taken with an optical microscope such as a scanning electron microscope.

An embodiment relates to a negative electrode for an all-solid-state battery including a negative electrode coating layer.

In an embodiment, the negative electrode coating layer refers to a layer that helps lithium ions deintercalated from the positive electrode active material during charging and discharging of an all-solid-state battery to move toward the negative electrode and be precipitated on the surface of a current collector. That is, a lithium precipitation layer is formed between the current collector and the negative electrode coating layer due to the precipitation of lithium ions, and the lithium precipitation layer acts as a negative electrode active material, and such a negative electrode is generally called a precipitation-type negative electrode. The metal and amorphous carbon included in the negative electrode coating layer do not act as a negative electrode active material that directly participate in the charge and discharge reaction. This precipitation-type negative electrode means a negative electrode that does not include a negative electrode active material when assembling a battery, but in which the lithium precipitation layer acts as a negative electrode active material.

The negative electrode includes a current collector and a negative electrode coating layer on one surface of the current collector. In an embodiment, the negative electrode coating layer includes a first region adjacent to the current collector and a second region not adjacent to the current collector, divided in the thickness direction.

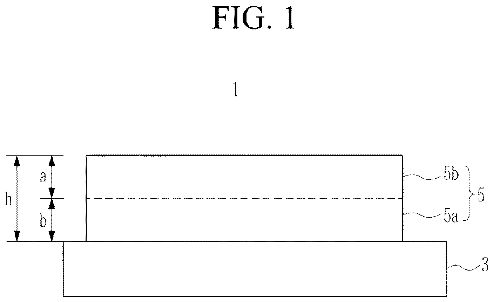

Referring to FIG. 1, the negative electrode 1 includes a current collector 3 and a negative electrode coating layer 5, and includes a first region 5a adjacent to the current collector 3 and a second region 5b not adjacent to the current collector 3.

In an embodiment, the first region may be a region corresponding to 80% to 20% of the total thickness of the negative electrode coating layer, or may be a region corresponding to 75% to 25% or 60% to 40%. Additionally, the second region may be a region corresponding to 80% to 20% of the total thickness of the negative electrode coating layer, or may be a region corresponding to 25% to 75% or 40% to 60%. That is, in an embodiment, the negative electrode coating layer is composed of a first region and a second region, and this if the total thickness of the negative electrode coating layer is 100%, when the first region is 20%, the second region corresponds to 80%.

Referring to FIG. 1, a corresponding to the first region shown in FIG. 1 corresponds to 80% to 20% of the total thickness (h) of the negative electrode coating layer.

In an embodiment, both the first region and the second region may include metal sulfide, and in particular, an amount of the metal sulfide of the second region may be greater than an amount of the metal sulfide of the first region. Specifically, the amount of the metal sulfide included in the second region may be 99 times to 1.5 times, or 50 times to 3 times, the amount of the metal sulfide included in the first region. For example, if the amount of the metal sulfide included in the first region is 1 wt% based on 100 wt% of the total negative electrode coating layer, and the amount of the metal sulfide included in the second region is 5 wt% based on 100 wt% of the total negative electrode coating layer, the amount of the metal sulfide included in the second region is five times the amount included in the first region.

In this way, when both the first region and the second region of the negative electrode coating layer include metal sulfide, and the amount of the metal sulfide in the second region in contact with the electrolyte is greater than that in the first region in contact with the current collector, lithium ions released from the positive electrode active material and moved to the negative electrode coating layer may be more easily intercalated into the negative electrode coating layer. This lithium ion intercalation enhancement effect is because the metal sulfide is a lithiophilic material that reacts with lithium ions to form Li₂S, which may reduce the energy barrier of lithium ions and has high lithium ion conductivity. In addition, lithium ions may be easily moved toward the negative electrode current collector, enabling more stable lithium ion movement, so that lithium ions may be more uniformly accumulated and grown between the current collector and the negative electrode coating layer.

In an embodiment, the metal sulfide may be Li₂S, Ag₂S, Au₂S, Al₃S₂, Na₂S, NiS, Ti₂S, SnS, ZnS, CdS, MoS₂, FeS, Cu₂S, CuFeS₂, or a combination thereof.

The metal sulfide, for example, Li₂S, may also function as an artificial SEI layer (protective layer), and when included in excess in the second region in contact with the electrolyte, they exhibit excellent affinity in the area in contact with the electrolyte, for example, sulfur in a sulfide-based electrolyte, thereby improving the cycle-life.

In this way, an appropriate effect resulting from the inclusion of metal sulfide in the negative electrode coating layer may be obtained by controlling the amount of the metal sulfide depending on the location of the negative electrode coating layer.

If the metal sulfide is present in excess in the first region, i.e., in greater quantities than in the second region, the lithium ion energy barrier is not sufficiently reduced in the second region where lithium ions are first intercalated and in contact with the electrolyte, and thus the desired effect may not be obtained. In addition, when the metal sulfide is uniformly disposed in the first region and the second region, the effect obtained when the metal sulfide is present in the second region may be relatively reduced, so that a sufficient effect cannot be obtained.

In an embodiment, the amount of the metal sulfide included in the first region may be 80 wt% to 20 wt%, or 60 wt% to 40 wt%, based on 100 wt% of the total first region. Additionally, the amount of the metal sulfide included in the second region may be 80 wt% to 20 wt%, or 60 wt% to 40 wt%, based on 100 wt% of the total second region. When the amount of the metal sulfide included in the first region and the second region is within the above ranges and the amount of the metal sulfide included in the second region may be greater than the amount of the metal sulfide included in the first region, the affinity may be further improved at the boundary with the sulfide-based electrolyte, thereby further increasing the effect of lowering the lithium ion energy barrier.

The metal sulfide included in the first and second regions may exist in powder form.

In an embodiment, the amount of the metal sulfide may be 1 wt% to 50 wt% based on 100 wt% of the total negative electrode coating layer.

In an embodiment, the negative electrode coating layer includes Li₂S, and may further include Ag₂S, Au₂S, Al₃S₂, Na₂S, NiS, Ti₂S, SnS, ZnS, CdS, MoS₂, FeS, Cu₂S, CuFeS₂, or a combination thereof. When the negative electrode coating layer further includes Ag₂S, Au₂S, Al₃S₂, Na₂S, NiS, Ti₂S, SnS, ZnS, CdS, MoS₂, FeS, Cu₂S, CuFeS₂, or a combination thereof together with Li₂S, the sulfur included in these compounds may react with lithium ions to form Li₂S. Therefore, the affinity with the sulfide-based electrolyte due to the inclusion of Li₂S may be further improved, thereby further improving battery performance.

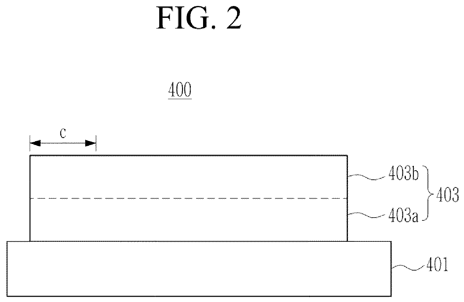

In another embodiment, Ag₂S, Au₂S, Al₃S₂, Na₂S, NiS, Ti₂S, SnS, ZnS, CdS, MoS₂, FeS, Cu₂S, CuFeS₂, or a combination thereof may be included in a specific region of the negative electrode coating layer, for example, at the terminal portions of the first region and the second region. The terminal portion means the end in the longitudinal direction of the current collector, and this terminal part means the C region shown in FIG. 2. Additionally, this terminal portion end may be an end in the longitudinal direction.

For example, the terminal portion may correspond to 90% to 10%, or may correspond to 80% to 20% of the total length of the negative electrode coating layer in the longitudinal direction of the current collector.

The negative electrode coating layer may include a carbon-based material and a metal. The carbon-based material and metal may act as a catalyst. In the negative electrode coating layer, for example, a metal may be supported on a carbon-based material, or a metal and a carbon-based material may be present in a mixture.

The carbon-based material may be amorphous carbon, crystalline carbon or a mixture thereof. The amorphous carbon may be, for example, carbon black, acetylene black, Denka black, Ketjen black, furnace black, activated carbon, or a combination thereof. An example of the carbon black may be Super P (Timcal). The amorphous carbon is not limited to this, and of course, anything classified as amorphous carbon in the relevant field may be s\used. The crystalline carbon may be natural graphite, artificial graphite, carbon nanotubes, mesophase carbon microbeads, graphene, or a combination thereof. The crystalline carbon may be unspecified, plate-shaped, flake-shaped, spherical or fibrous.

In an embodiment, the carbon-based material may be single particles or an aggregate having a form of secondary particles in which primary particles are aggregated. When the carbon-based material is a single particle, the size of the carbon-based material may be nano-sized with an average particle diameter of less than or equal to 100 nm, for example, 10 nm to 100 nm.

Additionally, when the carbon-based material is a granular material, the primary particle may have a particle diameter of 20 nm to 100 nm, and the secondary particle may have a particle diameter of 1 µm to 20 µm.

In an embodiment, the particle diameter of the primary particles may be greater than or equal to 20 nm, greater than or equal to 30 nm, greater than or equal to 40 nm, greater than or equal to 50 nm, greater than or equal to 60 nm, greater than or equal to 70 nm, greater than or equal to 80 nm, or greater than or equal to 90 nm, and less than or equal to 100 nm, less than or equal to 90 nm, less than or equal to 80 nm, less than or equal to 70 nm, less than or equal to 60 nm, less than or equal to 50 nm, less than or equal to 40 nm, or less than or equal to 30 nm.

In an embodiment, the particle diameter of the secondary particles may be greater than or equal to 1 µm, greater than or equal to 3 µm, greater than or equal to 5 µm, greater than or equal to 7 µm, greater than or equal to 10 µm, or greater than or equal to 15 µm, and less than or equal to 20 µm, less than or equal to 15 µm, less than or equal to 10 µm, less than or equal to 7 µm, less than or equal to 5 µm, or less than or equal to 3 µm.

The shape of the primary particles may be spherical, elliptical, plate-shaped, and combinations thereof, and in an embodiment, the shape of the primary particles may be spherical, elliptical, and a combination thereof.

The metal may be Ag, Au, Sn, Zn, Al, Mg, Ge, Cu, In, Ni, Bi, Pt, Pd, or a combination thereof. As the negative electrode coating layer includes the metal, the electrical conductivity of the negative electrode may be further improved.

The metal may be a nanoparticle, and an average size of the metal nanoparticle may be, for example, 5 nm to 80 nm, but nanometer-sized particles may be appropriately used. By using the metal nanoparticles having such a nano-size, battery characteristics (e.g., cycle-life characteristics) of an all-solid-state battery may be improved. When the metal particle size increases in micrometers, the uniformity of the metal particles in the negative electrode coating layer may decrease, the current density in a specific area may increase, and cycle-life characteristics may deteriorate.

In the negative electrode coating layer, the carbon-based material and metal may be included in both the first region and the second region. The carbon-based material and the metal may be the same or different in the first region and the second region.

An amount of the metal may be 1 wt% to 50 wt%, 2 wt% to 30 wt%, 2 wt% to 25 wt%, 2 wt% to 20 wt%, or 2 wt% to 15 wt% based on 100 wt% of the total negative electrode coating layer. The amount of the metal is the amount of the total metal included in the first and second regions of the negative electrode coating layer, and the amount of the metal need not be limited in each of the first and second regions. For example, the metal may be present in the same amount in the first region and the second region, or may be present in different amount.

Additionally, the carbon-based material may be present in an amount of 1 wt% to 99 wt%, 70 wt% to 97 wt%, 75 wt% to 96 wt%, 80 wt% to 95 wt%, or 85 wt% to 95 wt% based on 100 wt% of the total negative electrode coating layer. The amount of the carbon-based material is the amount of the total metal included in the first and second regions of the negative electrode coating layer, and the amount of the carbon-based material need not be limited in each of the first and second regions. For example, the carbon-based material may be present in the same amount, or may be present in different amount in the first region and the second region.

The negative electrode coating layer may further include a binder. In the negative electrode coating layer, the binder may be included in both the first region and the second region. The binder may be the same or different in the first region and the second region.

The binder may be a water-insoluble binder.

The water-insoluble binder may include, for example, polyvinylchloride, carboxylated polyvinylchloride, polyvinylfluoride, an ethylene oxide-containing polymer, ethylene propylene copolymer, polystyrene, polyvinylpyrrolidone, polyurethane, polytetrafluoroethylene, polyvinylidene fluoride, polyethylene, polypropylene, polyamideimide, polyimide, polyacrylate, or a combination thereof.

The binder may be included in an amount of 1 wt% to 15 wt% based on 100 wt% of the total negative electrode coating layer, for example, the binder may be included in an amount of greater than or equal to 1 wt%, greater than or equal to 2 wt%, greater than or equal to 3 wt%, greater than or equal to 4 wt%, greater than or equal to 5 wt%, greater than or equal to 6 wt%, greater than or equal to 7 wt%, greater than or equal to 8 wt%, greater than or equal to 9 wt%, greater than or equal to 10 wt%, greater than or equal to 11 wt%, greater than or equal to 12 wt%, greater than or equal to 13 wt%, or greater than or equal to 14 wt%, and less than or equal to 15 wt%, less than or equal to 14 wt%, less than or equal to 13 wt%, less than or equal to 12 wt%, less than or equal to 11 wt%, less than or equal to 10 wt%, less than or equal to 9 wt%, less than or equal to 8 wt%, less than or equal to 7 wt%, less than or equal to 6 wt%, less than or equal to 5 wt%, less than or equal to 4 wt%, less than or equal to 3 wt%, or less than or equal to 2 wt% or less based on 100 wt% of the total negative electrode coating layer.

The amount of the binder is the amount of the total metal included in the first and second regions of the negative electrode coating layer, and there is no need to limit the amount of the binder in each of the first and second regions. For example, the amounts of the binder may be the same or different in the first and second regions.

When the binder is included in the negative electrode coating layer of the all-solid-state battery in the above amount range, the electrical resistance and adhesive strength may be improved, thereby improving the characteristics (battery capacity and output characteristics) of the all-solid-state battery.

In an embodiment, the negative electrode coating layer may further include a solid electrolyte. In the negative electrode coating layer, the solid electrolyte may be included in both the first region and the second region. The solid electrolyte may be the same or different in the first region and the second region.

In an embodiment, the amount of the solid electrolyte may be greater than 0 wt%, less than or equal to 30 wt%, and may be 10 wt% to 20 wt% based on 100 wt% of the total negative electrode coating layer. The amount of the solid electrolyte is the amount of the total metal included in the first region and the second region of the negative electrode coating layer, and the amount of the solid electrolyte need not be limited in each of the first region and the second region. For example, the solid electrolyte may be present in the first region and the second region in the same amount or in different amounts.

The solid electrolyte may be a sulfide-based solid electrolyte. Because the negative electrode coating layer according to an embodiment includes metal sulfide, using a sulfide-based solid electrolyte as the solid electrolyte included in the solid electrolyte layer may have the advantage of a fast lithium ion movement effect due to the high affinity between sulfur included in the metal sulfide and sulfur included in the sulfide-based solid electrolyte, compared to an oxide-based solid electrolyte, a halide-based solid electrolyte, or a solid polymer electrolyte.

In an embodiment, the sulfide-based solid electrolyte may be, for example Li₂S-P₂S₅, Li₂S-P₂S₅-LiX (wherein X is a halogen element, for example I or Cl), Li₂S-P₂S₅-Li₂O, Li₂S-P₂Ss-Li₂0-LiI, Li₂S-SiS₂, Li₂S-SiS₂-LiI, Li₂S-SiS₂-LiBr, Li₂S-SiS2-LiCl, Li2S-SiS2-B2S₃-LiI, Li2S-SiS2-P2S₅-LiI, Li₂S-B₂S₃, Li₂S-P₂S₅-ZₘSₙ (m and n are integers of 0 or more and 12 or less and Z is one of Ge, Zn, or Ga), Li₂S-GeS₂, Li₂S-SiS₂-Li₃PO₄, Li₂S-SiS₂-LiₚMO_{q} (wherein p and q are each 0 or more and 12 or less and M is one of P, Si, Ge, B, Al, Ga, or In), or LiₐM_{b}P_{c}S_{d}Aₑ (wherein a, b, c, d, and e are each 0 or more and 12 or less, M is Ge, Sn, Si, or a combination thereof, and A is one of F, Cl, Br, or I). The sulfide-based solid electrolyte may be, for example, Li₇₋ₓPS₆₋ₓFₓ (0 ≤ x ≤ 2), Li₇₋ₓPS₆₋ₓClₓ (0 ≤ x ≤ 2), Li₇₋ₓPS₆₋ₓBrₓ (0 ≤ x ≤ 2), or Li₇₋ₓPS₆₋ₓIₓ (0 ≤ x ≤ 2). In addition, specifically, it may be Li₃PS₄, Li₇P₃S₁₁, Li₇PS₆, Li₆PS₅Cl, Li₆PS₅Cl, Li₆PS₅I, Li₆PS₅Br, Li_{5.8}PS_{4.8}Cl_{1.2}, Li_{6.2}PS_{5.2}Br_{0.8}, and the like.

In an embodiment, the sulfide-based solid electrolyte may be an argyrodite-type sulfide-based solid electrolyte. The argyrodite-type sulfide-based solid electrolyte may be, for example, LiₐM_{b}P_{c}S_{d}Aₑ (wherein a, b, c, d and e are all 0 or more and 12 or less, M is Ge, Sn, Si, or a combination thereof, and A is F, Cl, Br, or I), and specifically, Li₃PS₄, Li₇P₃S₁₁, Li₇PS₆, Li₆PS₅Cl, Li₆PS₅Br, Li₆PS₅I, Li_{5.8}PS_{4.8}Cl_{1.2}, Li_{6.2}PS_{5.2}Br_{0.8}, and the like.

The sulfide-based solid electrolyte may be amorphous, crystalline, or a mixed state thereof. The sulfide-based solid electrolyte may be obtained by, for example, mixing Li₂S and P₂S₅ in a molar ratio of 50:50 to 90:10 or 50:50 to 80:20. Within the above mixing ratio range, a sulfide-based solid electrolyte having excellent ionic conductivity may be prepared. The ionic conductivity may be further improved by adding SiS₂, GeS₂, B₂S₃, and the like as other components thereto. Mechanical milling or a solution method may be applied as a mixing method. The mechanical milling is to make starting materials into particulates by putting the starting materials, ball mills, and the like in a reactor and fervently stirring them. The solution method may be performed by mixing the starting materials in a solvent to obtain a solid electrolyte as a precipitate. Additionally, additional firing may be performed after mixing. If additional firing is performed, the crystals of the solid electrolyte may become more solid.

Of course, a commercially available solid electrolyte may be used as the sulfide-based solid electrolyte.

The negative electrode coating layer may further include additives such as fillers and dispersants. Additionally, known materials generally used in all-solid-state batteries may be used as fillers, dispersants, etc. that may be included in the negative electrode coating layer.

The thickness of the negative electrode coating layer may be 1 µm to 20 µm. For example, the thickness of the negative electrode coating layer may be greater than or equal to 1 µm, greater than or equal to 3 µm, or greater than or equal to 5 µm, and less than or equal to 20 µm, less than or equal to 18 µm, less than or equal to 16 µm, less than or equal to 14 µm, less than or equal to 12 µm, or less than or equal to 10 µm.

The current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil or sheet. A thickness of the negative electrode current collector may be 1 µm to 20 µm, 5 µm to 15 µm, or 7 µm to 10 µm.

The current collector may include a metal substrate and may further include a thin film formed on the substrate. The thin film may include an element that may form an alloy with lithium, and may be, for example, gold, silver, zinc, tin, indium, silicon, aluminum, bismuth, or a combination thereof, but is not limited thereto and in the technical field, any element that may form an alloy with lithium may be used. When the current collector further includes a thin film and the lithium-containing layer is formed by precipitating during charging, a more flattened lithium-containing layer may be formed, thereby further improving the cycle-life of the all-solid-state battery.

A thickness of the thin film may be 1 nm to 800 nm, 10 nm to 700 nm, 50 nm to 600 nm, or 100 nm to 500 nm. When the thin film thickness is within the above range, cycle-life characteristics may be further improved.

According to an embodiment, a negative electrode may be obtained by a preparing process in which a coating process for forming a negative electrode coating layer is performed two or more times. For example, the negative electrode coating layer may be formed using a negative electrode coating layer composition to which a metal sulfide precursor is added.

An example of performing the coating process twice is as follows.

A first region composition is prepared by mixing a carbonaceous material, a metal, a metal sulfide precursor, and a binder in a solvent. Herein, a mixing ratio of the carbon-based material, the metal, the precursor, and the binder may be 98: 1: 1 to 30: 60: 10.

Additionally, a second region composition is prepared by mixing a carbon-based material, a metal, a metal sulfide precursor, and a binder in a solvent. Herein, a mixing ratio of the carbon-based material, the metal, the precursor, and the binder may be 98: 1: 1 to 45: 45: 10.

Herein, in the first and second region compositions, an amount of the precursor included in the second region composition may be adjusted to be greater than an amount of the precursor included in the first region composition. For example, the amount of the precursor included in the second region composition may be adjusted to be 1.5 times to 99 times the amount of the precursor included in the first region composition. When the amounts of the precursors included in the first region composition and the second region composition are within the above ranges, the amount of the metal sulfide included in the second region of the fabricated final negative electrode may be 1.5 times to 99 times greater than the amount of the metal sulfide included in the first region.

The carbon-based material may be amorphous carbon or crystalline carbon as described above. The metal may be the metal described above.

The metal sulfide precursor may be Ag₂S, Au₂S, Al₃S₂, Na₂S, NiS, Ti₂S, SnS, ZnS, CdS, MoS₂, FeS, Cu₂S, CuFeS₂, or a combination thereof. The binder may be the binder described above. The solvent may be N-methylpyrrolidone (NMP) solvent, benzene, hexane, tetrahydrofuran (THF), ethanol, isopropyl alcohol (IPA), DMSO, DMF, AN, or a combination thereof.

The first region composition is coated on the current collector and dried to form the first region. Next, the second region composition is coated on the first region and dried to form the second region.

When the coating process is performed three or more times, three or more compositions having the metal sulfide precursor in different amounts, for example, three to six compositions, may be prepared and performed. Here, the coating process may be performed by preparing a first composition including the metal sulfide precursor in an amount of 1 wt% to 45 wt% based on 100 wt% of a total composition and then, gradually increasing the amount of the metal sulfide precursor by 5 wt% to 60 wt% in a second composition, a third composition....an n^{th} composition. For example, the coating process may be performed by applying the first composition having the smallest metal sulfide precursor amount and then, the compositions respectively having the increasingly larger metal sulfide precursor amounts.

Regardless of the number of the coating processes, the drying process may be performed by vacuum drying. This drying process may be performed at 20 °C to 100 °C.

If an all-solid-state battery including such a negative electrode is charged and discharged, because metal sulfide included in the negative electrode coating layer reacts with lithium moved from the positive electrode active material to form metal sulfide, for example, Li₂S, the metal sulfide, for example, Li₂S remains in the negative electrode coating layer. In addition, herein, because the second coating layer composition forming the second region includes the metal sulfide precursor in a larger amount than that of the first coating layer composition, after the charge and discharge, the metal sulfide, for example, Li₂S may remain more in the second region of the negative electrode coating layer than in the first region thereof. Even if the coating process is 3 times or more performed, because the coating process is performed in the method of increasing the metal sulfide precursor amount, the metal sulfide, for example, Li₂S may remain more in the second region than in the first region.

The charge and discharge process may be once to three times performed at 0.05 C to 0.1 C at 25 °C to 60 °C.

In addition, because the reaction may mainly occur in a central portion of the positive electrode coating layer, the metal sulfide precursor, an unreacted material, may remain in terminal portions, for example, both of the terminal portions of the positive electrode coating layer.

Another embodiment provides an all-solid-state battery including the negative electrode, a positive electrode, and a solid electrolyte layer between the negative electrode and the positive electrode.

The negative electrode according to an embodiment may further include a lithium-containing layer formed during initial charging after fabricating the battery between the current collector and the negative electrode coating layer. A thickness of the lithium-containing layer may be 1 µm to 1000 µm, 1 µm to 500 µm, 1 µm to 200 µm, 1 µm to 150 µm, 1 µm to 100 µm, or 1 µm to 50 µm. If the thickness of the lithium-containing layer is within the above range, it may properly function as a lithium reservoir and may further improve its cycle-life.

The lithium-containing layer may be formed after fabricating a battery, during charging, lithium ions are released from the positive electrode active material, pass through the solid electrolyte and move toward the negative electrode, and as a result, lithium is precipitated and deposited on the negative electrode current collector.

The charging process may be a formation process performed 1 time to 3 times at 0.05 C to 1 C at 25 °C to 50 °C. If lithium is precipitated and deposited to form a lithium-containing layer, the lithium included in the lithium-containing layer is ionized and moves toward the positive electrode during discharge, so that this lithium may be used as a negative electrode active material.

In an embodiment, because the lithium-containing layer is present between the current collector and the negative electrode coating layer, the negative electrode coating layer may serve as a protective layer for the lithium-containing layer, thereby suppressing the precipitation growth of lithium dendrites. As a result, short circuiting and capacity reduction of the all-solid-state battery may be suppressed, and as a result, the cycle-life of the all-solid-state battery may be improved.

The solid electrolyte layer includes a solid electrolyte. This solid electrolyte may be an inorganic solid electrolyte such as a sulfide-based solid electrolyte, an oxide-based solid electrolyte, or a halide-based solid electrolyte, or a solid polymer electrolyte.

In an embodiment, the sulfide-based solid electrolyte is as described above.

The oxide-based solid electrolyte may be, for example, Li₁₊ₓTi₂₋ₓAl(PO₄)₃ (LTAP) (0≤x≤4), Li_{1+x+y}AlₓTi₂₋ₓSi_{y}P_{3-y}O₁₂ (0<x<2, 0 ≤ y<3), BaTiO₃, Pb(Zr,Ti)O₃ (PZT), Pb₁₋ₓLaₓZr_{1-y}Ti_{y}O₃ (PLZT) (0 ≤ x<1, 0 ≤ y<1), Pb(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}(PO₄)₃ (0<x<2, 0<y<3), Li_{1+x+y}(Al, Ga)ₓ(Ti, Ge)₂₋ₓSi_{y}P_{3-y}O₁₂ (0 ≤ x ≤ 1, 0 ≤ y ≤ 1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, Garnet-based ceramics Li₃₊ₓLa₃M₂O₁₂ (M = Te, Nb, or Zr, and x is an integer of 1 to 10), or a mixture thereof.

The solid polymer electrolyte may include, for example, one or more selected from polyethylene oxide, poly(diallyldimethylammonium) trifluoromethanesulfonylimide (poly(diallyldimethylammonium)TFSI), Cu₃N, Li₃N, LiPON, Li₃PO₄ · Li₂S · SiS₂, Li₂S · GeS₂ · Ga₂S₃, Li₂O · 11Al₂O₃, Na₂O · 11Al₂O₃, (Na,Li)₁₊ₓTi₂₋ₓAlₓ(PO₄)₃(0.1 ≤ x ≤ 0.9), Li₁₊ₓHf₂₋ₓAlₓ(PO₄)₃ (0.1 ≤ x ≤ 0.9), Na₃Zr₂Si₂PO₁₂, Li₃Zr₂Si₂PO₁₂, Na₅ZrP₃O₁₂, Na₅TiP₃O₁₂, Na₃Fe₂P₃O₁₂, Na₄NbP₃O₁₂, Na-silicates, Li_{0.3}La_{0.5}TiO₃, Na₅MSi₄O₁₂ (wherein M is a rare earth element of Nd, Gd, Dy, and the like), Li₅ZrP₃O₁₂, Li₅TiP₃O₁₂, Li₃Fe₂P₃O₁₂, Li₄NbP₃O₁₂, Li₁₊ₓ(M,Al,Ga)x(Ge_{1-y}Ti_{y})₂₋ₓ(PO₄)₃ (x ≤ 0.8, 0 ≤ y ≤ 1.0, M is Nd, Sm, Eu, Gd, Tb, Dy, Ho, Er, Tm, or Yb), Li_{1+x+y}QₓTi₂₋ₓSi_{y}P_{3-y}O₁₂ (0< x ≤ 0.4, 0<y ≤ 0.6, Q is Al or Ga), Li₆BaLa₂Ta₂O₁₂, Li₇La₃Zr₂O₁₂, Li₅La₃Nb₂O₁₂, Li₅La₃M₂O₁₂ (M is Nb, Ta), and Li₇₊ₓAₓLa₃₋ₓZr₂O₁₂ (0<x<3, A is Zn).

The halide-based solid electrolyte may include a Li element, an M element (M is a metal other than Li), and an X element (X is a halogen). Examples of X may include F, Cl, Br, and I. In particular, in the halide-based solid electrolyte, at least one of Br and Cl is suitable as the above X. In addition, examples of M may include metal elements such as Sc, Y, B, Al, Ga, and In.

A composition of the halide-based solid electrolyte is not particularly limited, but may be represented by Li₆₋₃ₐMₐBr_{b}Cl_{c} (where M is a metal other than Li, 0<a<2, 0 ≤ b ≤ 6, 0 ≤ c ≤ 6, b+c=6). Herein, a may be 0.75 or more, 1 or more, and a may be 1.5 or less. The b may be 1 or more, and may be 2 or more. Additionally, c may be 3 or more, and may be 4 or more. Specific examples of the halide-based solid electrolyte may be Li₃YBr₆, Li₃YCl₆, or Li₃YBr₂Cl₄.

The solid electrolyte may in the form of particles, and an average particle diameter (D50) may be less than or equal to 5.0 µm, for example, 0.1 µm to 5.0 µm, 0.5 µm to 5.0 µm, 0.5 µm to 4.0 µm, 0.5 µm to 3.0 µm, 0.5 µm to 2.0 µm, or 0.5 µm to 1.0 µm.

The solid electrolyte layer may further include a binder. Herein, the binder may be a styrene butadiene rubber, polytetrafluoroethylene, polyvinylidene fluoride, polyethylene, an acrylate-based polymer, or a combination thereof, but is not limited thereto, and anything used as a binder in the art may be used. The acrylate-based polymer may be butyl acrylate, polyacrylate, polymethacrylate, or a combination thereof.

The solid electrolyte layer may be formed by adding a solid electrolyte to a binder solution, coating it on a base film, and drying the resultant. The solvent of the binder solution may be isobutyryl isobutyrate, xylene, toluene, benzene, hexane, or a combination thereof. A forming process of the solid electrolyte layer is well known in the art, and thus a detailed description thereof will be omitted.

The positive electrode includes a positive electrode current collector and a positive electrode active material layer on at least one surface of the positive electrode current collector.

The positive electrode active material layer may include a positive electrode active material. The positive electrode active material may be a positive electrode active material capable of reversibly intercalating and deintercalating lithium ions, and for example, the positive electrode active material may be, for example, at least one of a composite oxide of lithium and a metal selected from cobalt, manganese, nickel, and a combination thereof. Examples of the positive electrode active material may include LiₐA_{1-b}B¹_{b}D¹₂ (0.90≤a≤1.8, 0≤b≤0.5); LiₐE_{1-b}B¹_{b}O_{2-c}D¹_{c} (0.90≤a≤1.8, 0≤b≤0.5, 0≤c≤0.5); LiₐE_{2-b}B¹_{b}O_{4-c}D¹_{c} (0.90≤a≤1.8, 0≤b≤0.5, 0≤c≤05); LiₐNi_{1-b-c}Co_{b}B¹_{c}D¹_{α} (0.90≤a≤1.8, 0≤b≤0.5, 0≤c≤0.5, 0 <α≤2); LiₐNi_{1-b-c}Co_{b}B¹_{c}O_{2-α}F¹_{α} (0.90≤a≤1.8, 0 ≤b≤0.5, 0≤c≤0.5, 0<α<2); LiₐNi_{1-b-c}Co_{b}B¹_{c}O_{2-α}F¹₂ (0.90≤a≤1.8, 0≤b≤0.5, 0≤c≤0.5, 0<α<2); LiₐNi_{1-b-c}Mn_{b}B¹_{c}D¹_{α} (0.90≤a≤1.8, 0≤b≤0.5, 0≤c≤0.5, 0<α≤2); LiₐNi_{1-b-c}Mn_{b}B¹_{c}O_{2-α}F¹_{α} (0.90≤a≤1.8, 0≤b≤0.5, 0≤c≤0.5, 0<α<2); LiₐNi_{1-b-c}Mn_{b}B¹_{c}O_{2-α}F¹2 (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0 ≤c≤0.5, 0.001≤d≤0.1); LiₐNi_{b}Co_{c}L¹_{d}GeO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QO₂ QS₂ LiQS₂ V₂O₅ LiV₂O₅ LiI¹O₂ LiNiVO₄ Li_{(3-f)}J₂(PO₄)₃ (0≤f≤2); Li_{(3-f)}Fe₂(PO₄)₃ (0≤f≤2); or LiFePO₄.

In the above chemical formulas, A is Ni, Co, Mn, or a combination thereof; B¹ is Al, Ni, Co, Mn, Cr, Fe, Mg, Sr, V, a rare-earth element, or a combination thereof; D' is O, F, S, P, or a combination thereof; E is Co, Mn, or a combination thereof; F¹ is F, S, P, or a combination thereof; G is Al, Cr, Mn, Fe, Mg, La, Ce, Sr, V, or a combination thereof; Q is Ti, Mo, Mn, or a combination thereof; I¹ is Cr, V, Fe, Sc, Y, or a combination thereof; J is V, Cr, Mn, Co, Ni, Cu, or a combination thereof; and L¹ is Mn, Al or a combination thereof.

According to an embodiment, the positive electrode active material may be a ternary lithium transition metal such as LiNiₓCo_{y}Al_{z}O₂ (NCA), LiNiₓCo_{y}Mn_{z}O₂ (NCM) (wherein 0<x<1, 0<y<1, 0<z<1, x+y+z=1).

Also, the compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound, and for example, the method may include any coating method such as spray coating, dipping, and the like, but is not illustrated in more detail since it is well-known in the related field.

In addition, as the coating layer, any known coating layer for the positive electrode active material of an all-solid-state battery may be applied, examples of which include Li₂O-ZrO₂ (LZO).

In addition, when the positive electrode active material is a ternary compound including nickel, cobalt, and manganese, or nickel, cobalt, and aluminum, the capacity density of the all-solid-state battery may be further improved and metal elution from the positive electrode active material in the charged state may be further reduced. Because of this, the long-term reliability and cycle characteristics of the all-solid-state battery may be further improved in a charged state.

Here, examples of the shape of the positive electrode active material include particle shapes such as spheres and ellipsoids. Additionally, the average particle diameter of the positive electrode active material is not particularly limited, and may be within a range applicable to the positive electrode active material of existing all-solid-state rechargeable batteries. Additionally, the amount of the positive electrode active material in the positive electrode active material layer is not particularly limited, and may be within a range applicable to the positive electrode layer of an existing all-solid-state rechargeable batteries.

The positive electrode active material layer may further include a solid electrolyte. The solid electrolyte included in the positive electrode active material layer may be the same as or different from the solid electrolyte included in the solid electrolyte layer. The solid electrolyte may be included in an amount of 10 wt% to 30 wt% based on a total weight of the positive electrode active material layer.

The positive electrode current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil or sheet.

The positive electrode active material layer may further include a binder and/or a conductive material.

The binder may include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyvinylidene fluoride-hexafluoropropylene, polyethylene, polypropylene, a styrene-butadiene rubber, an acrylated styrene-butadiene rubber, an epoxy resin, nylon, and the like, but is not limited thereto.

The binder may be included in an amount of 0.1 wt% to 5 wt%, or 0.1 wt% to 3 wt% %, based on a total weight of the positive electrode active material layer. Within the above amount range, the binder may sufficiently exhibit adhesive ability without deteriorating battery performance.

The conductive material is used to impart conductivity to the electrode, and any material that does not cause chemical change and conducts electrons may be used in the battery. Examples of the conductive material may include a carbon-based material such as natural graphite, artificial graphite, carbon black, acetylene black, and Ketjen black, a carbon fiber, a carbon nanofiber, and carbon nanotube, a metal-based material including copper, nickel, aluminum, silver, etc. and in the form of a metal powder or a metal fiber, a conductive polymer such as a polyphenylene derivative, or a mixture thereof.

The conductive material may be included in an amount of 0.1 wt% to 5 wt%, or 0.1 wt% to 3 wt% %, based on a total weight of the positive electrode active material layer. Within the above amount range, the conductive material may improve electrical conductivity without deteriorating battery performance.

A thickness of the positive electrode active material layer may be 90 µm to 200 µm. For example, the thickness of the positive electrode active material layer may be greater than or equal to 90 µm, greater than or equal to 100 µm, greater than or equal to 110 µm, greater than or equal to 120 µm, greater than or equal to 130 µm, greater than or equal to 140 µm, greater than or equal to 150 µm, greater than or equal to 160 µm, greater than or equal to 170 µm, greater than or equal to 180 µm, or greater than or equal to 190 µm, greater than or equal to 200 µm, less than or equal to 190 µm, less than or equal to 180 µm, less than or equal to 170 µm, less than or equal to 160 µm, less than or equal to 150 µm, less than or equal to 140 µm, less than or equal to 130 µm, less than or equal to 120 µm, or less than or equal to 110 µm.

In an embodiment, a cushioning material may be additionally included to buffer thickness changes that occur when the all-solid-state battery is charged and discharged. The cushioning material may be present between the negative electrode and the case, and in the case of a battery in which one or more electrode assemblies are stacked, it may be present between different electrode assemblies.

The cushioning material may include a material that has an elastic recovery rate of 50% or more and has an insulating function, and specifically includes silicone rubber, acrylic rubber, fluorine-based rubber, nylon, synthetic rubber, or a combination thereof. The cushioning material may be present in the form of a polymer sheet.

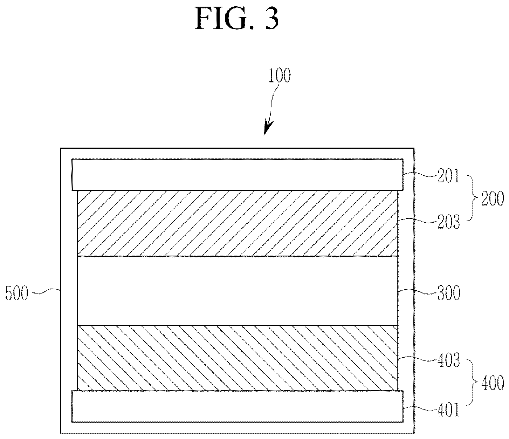

FIG. 3 is a cross-sectional view of an all-solid-state battery according to an embodiment. Referring to FIG. 3, the all-solid-state battery 100 includes an electrode assembly in which a negative electrode 400 including a negative electrode current collector 401 and a negative electrode coating layer 403, a solid electrolyte layer 300, and a positive electrode 200 including a positive electrode active material layer 203 and the positive electrode current collector 201 are stacked and a case such as a pouch housing the electrode assembly. The all-solid-state battery 100 may further include an elastic layer 500 on the outside of at least one of the positive electrode 200 and the negative electrode 400. Although FIG. 3 shows one electrode assembly including the negative electrode 400, the solid electrolyte layer 300, and the positive electrode 200, an all-solid-state battery may also be fabricated by stacking two or more electrode assemblies.

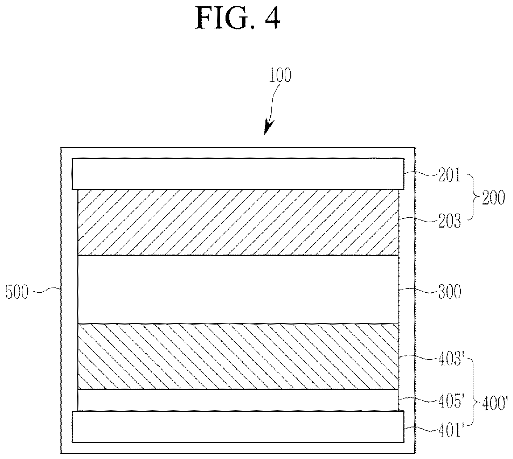

FIG. 4 schematically shows an all-solid-state battery according to another embodiment. The all-solid-state battery 100 shown in FIG. 4 includes a positive electrode 200 including a positive electrode current collector 201 and a positive electrode active material layer 203, a negative electrode 400 including a negative electrode current collector 401, and a negative electrode coating layer 403, and a solid electrolyte 300 between the positive electrode 200 and the negative electrode 400, a battery case 500 housing the same, and also includes a lithium precipitation layer 405' between the negative electrode current collector 401 and the negative electrode coating layer 403. This lithium precipitation layer may be formed when the all-solid-state battery is charged, lithium ions are released from the positive electrode active material and deposited on the negative electrode current collector 401'.

An all-solid-state battery according to an embodiment may be fabricated by placing a negative electrode, a positive electrode, and a solid electrolyte layer between the negative electrode and the positive electrode, preparing a stack, and pressing the stack.

The pressing process may be performed in the range of 25 °C to 90 °C. Additionally, the pressing process may be performed by pressing at a pressure of less than or equal to 550 MPa, for example, less than or equal to 500 MPa, for example 1 MPa to 500 MPa. The pressing time may vary depending on temperature and pressure, and may be, for example, less than 30 minutes. The pressing process may be, for example, isostatic press, roll press, plate press, or warm isostatic press (WIP).

### MODE FOR PERFORMING THE INVENTION

Hereinafter, examples of the present invention and comparative examples are described. These examples, however, are not in any sense to be interpreted as limiting the scope of the invention.

### (Example 1)

### (1) Preparation of Negative Electrode

A first region composition was prepared by mixing carbon black (an average particle diameter: 35 nm), Ag (an average particle diameter: 60 nm), Ag₂S, and a polyvinylidene fluoride binder in a weight ratio of 90 : 2.5 : 0.5 : 7 in an N-methylpyrrolidone (NMP) solvent.

A second region composition was prepared by mixing carbon black, Ag, Ag₂S, and a polyvinylidene fluoride binder in a weight ratio of 85 : 5.5 : 2.5 : 7 in an N-methylpyrrolidone (NMP) solvent.

After coating and drying the first region composition on a stainless steel foil as a current collector, the second region composition was coated thereon and then, vacuum-dried at 80 °C, preparing a negative electrode including a 12 µm-thick negative electrode coating layer and the 10 µm-thick current collector. Herein, the first region had a thickness of 9 µm, and the second region had a thickness of 3 µm. In addition, the prepared negative electrode had an Ag amount of 3.25 wt% based on 100 wt% of the total negative electrode coating layer, a carbon black amount of 88.75 wt% based on 100 wt% of the total negative electrode coating layer, and a binder amount of 7 wt% based on 100 wt% of the total negative electrode coating layer. Furthermore, an AgS amount was 1 wt% based on 100 wt% of the total negative electrode coating layer.

### (2) Preparation of Solid Electrolyte Layer

To an argyrodite-type solid electrolyte of Li₆PS₅Cl, an isobutyryl isobutyrate binder solution (a solid content: 50 wt%) prepared by adding an acrylate-based polymer of butyl acrylate was added and then, mixed. Here, the solid electrolyte and the binder were mixed in a weight ratio of 98.7: 1.3.

The mixing process was performed by using a Thinky mixer. Subsequently, 2 mm zirconia balls were added to the obtained mixture and then, stirred again by using a Thinky mixer to prepare slurry. The slurry was cast on a release polytetrafluoroethylene film and then, dried at room temperature to fabricate a 100 µm-thick solid electrolyte layer.

### (3) Fabrication of All-solid-state Half-cell

The negative electrode, the solid electrolyte, and a lithium metal counter electrode were sequentially stacked and then, pressed with a pressure of 8 Mpa to fabricate an all-solid-state battery cell.

### (Example 2)

A first region composition was prepared by mixing carbon black, Ag, Ag₂S, and a polyvinylidene fluoride binder in a weight ratio of 87 : 2 : 4 : 7 in an N-methylpyrrolidone (NMP) solvent.

A second region composition was prepared by mixing carbon black, Ag, Ag₂S, and a polyvinylidene fluoride binder in a weight ratio of 79 : 2 : 12 : 7 in an N-methylpyrrolidone (NMP) solvent.

Except for using the first region composition and the second region composition, a negative electrode for an all-solid-state battery was prepared. Herein, the formed negative electrode coating layer had a thickness of 12 µm, the first region had a thickness of 3 µm, and the second region had a thickness of 9 µm. In addition, the prepared negative electrode had 2 wt% of an Ag amount based on 100 wt% of the total negative electrode coating layer, 81 wt% of a carbon black amount based on 100 wt% of the total negative electrode coating layer, and 7 wt% of a binder amount based on 100 wt% of the total negative electrode coating layer. In addition, its AgS amount was 10 wt% based on 100 wt% of the total negative electrode coating layer.

This negative electrode, the solid electrolyte of Example 1, and a counter electrode were used to fabricate an all-solid-state half-cell in the same manner as in Example 1.

### (Example 3)

A first region composition was prepared by mixing carbon black, Ag, Ag₂S, and a polyvinylidene fluoride binder in a weight ratio of 88 : 5 : 10 : 7 in an N-methylpyrrolidone (NMP) solvent.

A second region composition was prepared by mixing carbon black, Ag, Ag₂S, and a polyvinylidene fluoride binder in a weight ratio of 58 : 5 : 30 : 7 in an N-methylpyrrolidone (NMP) solvent.

Except for using the first region composition and the second region composition, a negative electrode for an all-solid-state battery was prepared. Herein, the prepared negative electrode coating layer had a thickness of 12 µm, the first region had a thickness of 6 µm, and the second region had a thickness of 6 µm. In addition, the prepared negative electrode had 5 wt% of an Ag amount based on 100 wt% of the total negative electrode coating layer, 73 wt% of a carbon black amount based on 100 wt% of the total negative electrode coating layer, and 7 wt% of a binder amount based on 100 wt% of the total negative electrode coating layer. In addition, its AgS amount was 15 wt% based on 100 wt% of the total negative electrode coating layer.

This negative electrode, the solid electrolyte of Example 1, and a counter electrode were used to fabricate an all-solid-state half-cell in the same manner as in Example 1.

### (Example 4)

A first region composition was prepared by mixing carbon black, Ag, Ag₂S, and a polyvinylidene fluoride binder in a weight ratio of 82 : 2 : 9 :7 in an N-methylpyrrolidone (NMP) solvent.

A second region composition was prepared by mixing carbon black, Ag, Ag₂S, and a polyvinylidene fluoride binder in a weight ratio of 23 : 2 : 72 : 3 in an N-methylpyrrolidone (NMP) solvent.

Except for using the first region composition and the second region composition, a negative electrode for an all-solid-state battery was prepared. Herein, the prepared negative electrode coating layer had a thickness of 9 µm, the first region had a thickness of 6 µm, and the second region had a thickness of 3 µm. In addition, the prepared negative electrode had 2 wt% of an Ag amount based on 100 wt% of the total negative electrode coating layer, 62.3 wt% of a carbon black amount based on 100 wt% of the total negative electrode coating layer, and 5.7 wt% of a binder amount based on 100 wt% of the total negative electrode coating layer. In addition, its AgS amount was 30 wt% based on 100 wt% of the total negative electrode coating layer.

This negative electrode, the solid electrolyte of Example 1, and a counter electrode were used to fabricate an all-solid-state half-cell in the same manner as in Example 1.

### (Example 5)

A first region composition was prepared by mixing carbon black, Ag, Ag₂S, and a polyvinylidene fluoride binder in a weight ratio of 65 : 5 : 23 : 7 in an N-methylpyrrolidone (NMP) solvent.

A second region composition was prepared by mixing carbon black, Ag, Ag₂S, and a polyvinylidene fluoride binder in a weight ratio of 2 : 1 : 95 : 2 in an N-methylpyrrolidone (NMP) solvent.

Except for using the first region composition and the second region composition, a negative electrode for an all-solid-state battery was prepared. Herein, the prepared negative electrode coating layer had a thickness of 8 µm, the first region had a thickness of 6 µm, and the second region had a thickness of 2 µm. In addition, the prepared negative electrode had 49.25 wt% of an Ag amount based on 100 wt% of the total negative electrode coating layer, 4 wt% of a carbon black amount based on 100 wt% of the total negative electrode coating layer, and 5.75 wt% of a binder amount based on 100 wt% of the total negative electrode coating layer. In addition, its AgS amount was 49 wt% based on 100 wt% of the total negative electrode coating layer.

This negative electrode, the solid electrolyte of Example 1, and a counter electrode were used to fabricate an all-solid-state half-cell in the same manner as in Example 1.

### (Example 6)

A first region composition was prepared by mixing carbon black, Ag, Ag₂S, and a polyvinylidene fluoride binder in a weight ratio of 62 : 5 : 30 : 3 in an N-methylpyrrolidone (NMP) solvent.

A second region composition was prepared by mixing carbon black, Ag, Ag₂S, and a polyvinylidene fluoride binder in a weight ratio of 2 : 7 : 70 : 3 in an N-methylpyrrolidone (NMP) solvent.

Except for using the first region composition and the second region composition, a negative electrode for an all-solid-state battery was prepared. Herein, the prepared negative electrode coating layer had a thickness of 8 µm, the first region had a thickness of 4 µm, and the second region had a thickness of 4 µm. In addition, the prepared negative electrode had an Ag amount of 6 wt% based on 100 wt% of the total negative electrode coating layer, a carbon black amount of 32 wt% based on 100 wt% of the total negative electrode coating layer, and a binder amount of 3 wt% based on 100 wt% of the total negative electrode coating layer. In addition, its AgS amount was 59 wt% based on 100 wt% of the total negative electrode coating layer.

This negative electrode, the solid electrolyte of Example 1, and a counter electrode were used to fabricate an all-solid-state half-cell in the same manner as in Example 1.

### (Comparative Example 1)

A negative electrode coating composition was prepared by mechanically mixing carbon black and Ag in a weight ratio of 75:25 by using a mortar. The prepared negative electrode coating composition had 25 wt% of silver and 75 wt% of carbon black.

Except for coating the negative electrode coating composition on a stainless steel foil current collector, a negative electrode for an all-solid-state battery was prepared in the same manner as in Example 1. The formed negative electrode coating layer had a thickness of 10 µm.

This negative electrode, the solid electrolyte of Example 1, and a counter electrode were used to fabricate an all-solid-state half-cell in the same manner as in Example 1.

### (Comparative Example 2)

A first region composition was prepared by mixing carbon black, Ag, Ag₂S, and a polyvinylidene fluoride binder in a weight ratio of 60 : 5 : 30 : 5 in an N-methylpyrrolidone (NMP) solvent.

A second region composition was prepared by mixing carbon black, Ag, Ag₂S, and a polyvinylidene fluoride binder in a weight ratio of 10 : 3 : 85 : 2 in an N-methylpyrrolidone (NMP) solvent.

Except for using the first region composition and the second region composition, a negative electrode for an all-solid-state battery was prepared. Herein, the prepared negative electrode coating layer had a thickness of 10 µm, the first region had a thickness of 6 µm, and the second region had a thickness of 4 µm. In addition, the prepared negative electrode had an Ag amount of 4.2 wt% based on 100 wt% of the total negative electrode coating layer, a carbon black amount of 40 wt% based on 100 wt% of the total negative electrode coating layer, and a binder amount of 3.8 wt% based on 100 wt% of the total negative electrode coating layer

In addition, its AgS amount was 52 wt% based on 100 wt% of the total negative electrode coating layer.

This negative electrode, the solid electrolyte of Example 1, and a counter electrode were used to fabricate an all-solid-state half-cell in the same manner as in Example 1.

### (Comparative Example 3)

A first region composition was prepared by mixing carbon black, Ag, Ag₂S, and a polyvinylidene fluoride binder in a weight ratio of 40 : 10 : 44 : 6 in an N-methylpyrrolidone (NMP) solvent.

A second region composition was prepared by mixing carbon black, Ag, Ag₂S, and a polyvinylidene fluoride binder in a weight ratio of 2 : 1 : 96 : 1 in an N-methylpyrrolidone (NMP) solvent.

Except for using the first region composition and the second region composition, a negative electrode for an all-solid-state battery was prepared. Herein, the prepared negative electrode coating layer had a thickness of 6 µm, the first region had a thickness of 3 µm, and the second region had a thickness of 3. In addition, the prepared negative electrode had an Ag amount of 5.5 wt% based on 100 wt% of the total negative electrode coating layer, a carbon black amount of 22 wt% based on 100 wt% of the total negative electrode coating layer, and a binder amount of 3.5 wt% based on 100 wt% of the total negative electrode coating layer. In addition, an AgS amount was 69 wt% based on 100 wt% of the total negative electrode coating layer.

This negative electrode, the solid electrolyte of Example 1, and a counter electrode were used to fabricate an all-solid-state half-cell in the same manner as in Example 1.

### Experimental Example 1) Overvoltage Evaluation

The all-solid-state half-cells of Examples 1 to 6 and Comparative Examples 1 to 3, which were charged at 05 C, stared a voltage drop at OCV (Open circuit voltage, about 2.5 V). Subsequently, the cells were measured with respect to a voltage to a point where an inflection point occurred around 0 mV. This result was provided as an initial overvoltage in Table 1 below.

### Experimental Example 2) Evaluation of Initial Efficiency

The all-solid-state half-cells according to Examples 1 to 6 and Comparative Examples 1 to 3 were once charged and discharged at 0.05 C to obtain a percentage of discharge capacity to charge capacity. The results are shown as initial efficiency in Table 1.

### Experimental Example 3) Evaluation of Output Efficiency

The all-solid-state half-cells according to Examples 1 to 6 and Comparative Examples 1 to 3 were charged at 0.05 C and discharged at 0.1 C. A percentage of discharge capacity to charge capacity was calculated, and the results are shown as output efficiency in Table 1.

**(Table 1)**

| | Overvoltage (mV) | Initial efficiency (%) | Output efficiency (%) |
|---|---|---|---|
| Example 1 | 9.5 | 97.5 | 94.2 |
| Example 2 | 8.1 | 96.5 | 96.7 |
| Example 3 | 7.8 | 95.2 | 96.5 |
| Example 4 | 8.5 | 94.2 | 95.9 |
| Example 5 | 9.2 | 93.1 | 95.1 |
| Example 6 | 9.9 | 92.1 | 95.2 |
| Comparative Example 1 | 12.2 | 93.6 | 93.5 |
| Comparative Example 2 | 13.5 | 88.4 | 90.2 |
| Comparative Example 3 | 13.1 | 86.6 | short circuiting |

As shown in Table 1, the all-solid-state battery cells of Examples 1 to 5, in which the second region had 99 times to 1.5 times more metal sulfide than that of the first region, exhibited a low overvoltage and excellent initial efficiency and output efficiency. On the other hand, Comparative Example 1 including no metal sulfide exhibited a high overvoltage and somewhat low initial efficiency and output efficiency.

In addition, Comparative Examples 2 and 3, which had an excessive amount of metal sulfide based on a total amount of the negative electrode coating layer, exhibited too high an overvoltage and significantly deteriorated initial efficiency and output efficiency. In particular, in Comparative Example 3, because a short circuit occurred, it was impossible to obtain an output efficiency result.

### Experimental Example 4) SEM Photograph and EDAX

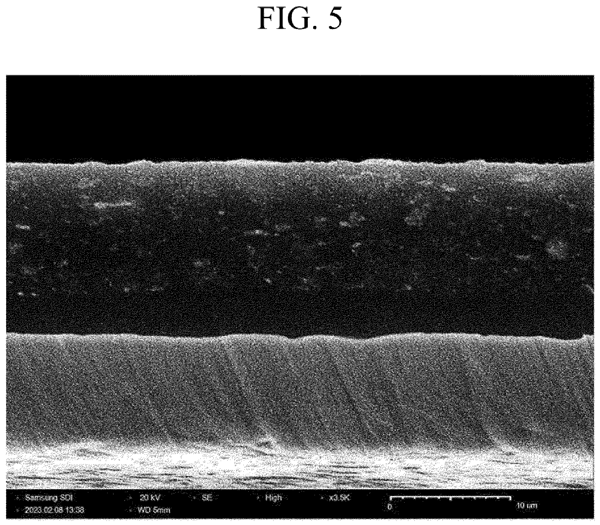

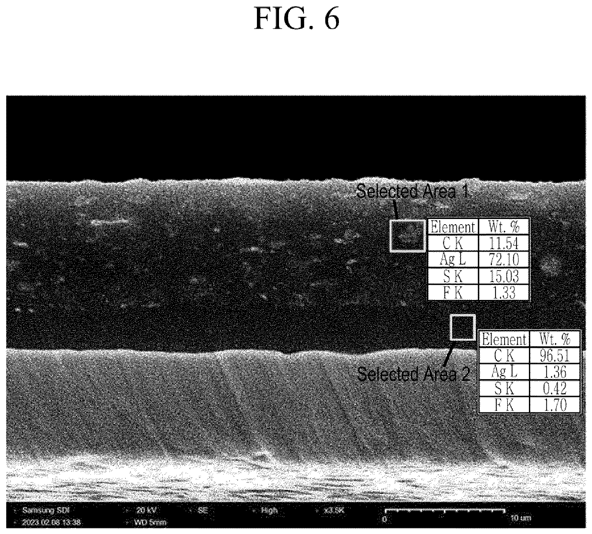

The cross-section of the negative electrode of Example 2 was polished and planarized. FIG. 5 shows a SEM image of the surface of negative electrode. In addition, FIG. 6 shows an EDAX measurement result of the negative electrode of FIG. 5. As shown in FIGS. 5 and 6, the negative electrode of Example 2 had different S amounts in selected Area 2 and selected Area 1, wherein the S amounts were measured through EDAX component analysis of the partial areas, which was performed for larger areas than the first region and second region to check the S amounts. Accordingly, the S amount in the second region was larger than that in the first region.

While this disclosure has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A negative electrode for an all-solid-state battery, comprising
a current collector; and
a negative electrode coating layer on the current collector,
wherein the negative electrode coating layer includes a first region adjacent to the current collector and a second region not adjacent to the current collector,
the first region and the second region comprise metal sulfide, and an amount of the metal sulfide of the second region is greater than an amount of the metal sulfide of the first region.

2. The negative electrode for an all-solid-state battery as claimed in claim 1, wherein the first region is a region corresponding to 80% to 20% of a total thickness of the negative electrode coating layer.

3. The negative electrode for an all-solid-state battery as claimed in claim 1, wherein the second region is a region corresponding to 80% to 20% of a total thickness of the negative electrode coating layer.

4. The negative electrode for an all-solid-state battery as claimed in claim 1, wherein an amount of the metal sulfide included in the second region is 99 times to 1.5 times an amount of the metal sulfide included in the first region.

5. The negative electrode for an all-solid-state battery as claimed in claim 1, wherein an amount of the metal sulfide is 1 wt% to 50 wt% based on 100 wt% of the total negative electrode coating layer.

6. The negative electrode for an all-solid-state battery as claimed in claim 1, wherein an amount of metal sulfide included in the first region is 1 wt% to 40 wt% based on 100 wt% of a total first region.

7. The negative electrode for an all-solid-state battery as claimed in claim 1, wherein The amount of the metal sulfide included in the second region is 2 wt% to 99 wt% based on 100 wt% of the total second region.

8. The negative electrode for an all-solid-state battery as claimed in claim 1, wherein the metal sulfide is Li₂S, Ag₂S, Au₂S, Al₃S₂, Na₂S, NiS, Ti₂S, SnS, ZnS, CdS, MoS₂, FeS, Cu₂S, CuFeS₂, or a combination thereof.

9. The negative electrode for an all-solid-state battery as claimed in claim 1, wherein the metal sulfide comprises Li₂S, and further comprises Ag₂S, Au₂S, Al₃S₂, Na₂S, NiS, Ti₂S, SnS, ZnS, CdS, MoS₂, FeS, Cu₂S, CuFeS₂, or combination thereof.

10. The negative electrode for an all-solid-state battery as claimed in claim 1, wherein terminal portions of the first region and the second region further comprises Ag₂S, Ag₂S, Au₂S, Al₃S₂, Na₂S, NiS, Ti₂S, SnS, ZnS, CdS, MoS₂, FeS, Cu₂S, CuFeS₂, or a combination thereof.

11. The negative electrode for an all-solid-state battery as claimed in claim 10, wherein the terminal portion corresponds to 90% to 10% of the total length of the negative electrode coating layer in the longitudinal direction of the current collector.

12. The negative electrode for an all-solid-state battery as claimed in claim 1, wherein the negative electrode coating layer comprises a carbon-based material and a metal.

13. The negative electrode for an all-solid-state battery as claimed in claim 12, wherein the carbon-based material comprises amorphous carbon, crystalline carbon, or a mixture thereof.

14. The negative electrode for an all-solid-state battery as claimed in claim 12, wherein the metal is Ag, Au, Sn, Zn, Al, Mg, Ge, Cu, In, Ni, Bi, Pt, Pd, or a combination thereof.

15. An all-solid-state battery, comprising
the negative electrode as claimed in any one of claim 1 to claim 14,
a positive electrode and
a solid electrolyte layer between the negative electrode and the positive electrode.

16. The all-solid-state battery as claimed in claim 15, wherein the solid electrolyte is a sulfide-based solid electrolyte.

17. The all-solid-state battery as claimed in claim 15, wherein all-solid-state battery further comprises a lithium-containing layer formed between the current collector and the negative electrode coating layer during initial charging.

18. The all-solid-state battery as claimed in claim 15, wherein the all-solid-state battery is subjected to charging and discharging.
